(19) Europäisches Patentamt
European Patent Office
Office européen des brevets

(11) **EP 4 080 299 A1**

(12) **EUROPEAN PATENT APPLICATION**

(43) Date of publication:
**26.10.2022 Bulletin 2022/43**

(51) International Patent Classification (IPC):
**G05B 19/19** $^{(2006.01)}$ **B23K 26/08** $^{(2014.01)}$
**B23K 26/082** $^{(2014.01)}$ **D06C 23/02** $^{(2006.01)}$

(21) Application number: **21382330.5**

(22) Date of filing: **19.04.2021**

(52) Cooperative Patent Classification (CPC):
**G05B 19/19; B23K 26/08; D06B 11/0096;**
**D06P 5/2005;** B23K 26/082; B23K 26/352;
G05B 2219/45165

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Jeanología, S.L.**
**46980 Paterna, Valencia (ES)**

(72) Inventors:
• **Carbonell Madern, Josep Maria**
**46980 Paterna (Valencia) (ES)**
• **Sans Perarnau, Albert**
**46980 Paterna (Valencia) (ES)**

(74) Representative: **González Poveda, Sara**
**INGENIAS**
**Creaciones, Signos e Invenciones S.L.**
**Avda. Diagonal 514, 1o 4a**
**08006 Barcelona (ES)**

(54) **SYSTEM AND METHOD FOR LASER MARKING A GRAPHIC ON AN OBJECT**

(57) There are claimed a system and a method for laser marking a graphic on an object. The system comprises: a laser system for producing a laser output; moving means for moving the laser output on a surface of an object; a controller for controlling the laser system and the moving means and for processing control information comprising or concerning a plurality of vectors, wherein for each vector the controller sets a vector speed and a vector laser power according to a marking intensity value of the corresponding vector group such that at least two vectors within one of said vector groups have with respect to each other different vector speeds and vector laser powers, and a laser output's speed that is set according to said at least two vectors remains different than zero when the laser output travels along two trajectory parts which correspond to said at least two vectors.

FIG. 1

EP 4 080 299 A1

**Description**

Technical Field

The present invention concerns a system and a method for laser marking a graphic on an object. Particularly, the object may be or may comprise a textile.

Background

Laser marking graphics on objects and in particular laser marking a graphic or a wear pattern on the surface of a textile is commonly done using laser systems that comprise controllers which are configured for working with raster graphics. Typically, a raster graphic represents a rectangular grid of pixels. A system's controller which is configured for working with a raster graphic processes information related to each pixel of the graphic, and controls the system such that a laser beam scans over a surface of the object and marks the graphic on said surface. Considering that the raster graphic is a dot matrix structure that comprises lines and columns of dots (pixels), a controller that works with raster graphics, controls the laser system such that the laser beam scans the surface line-by-line or column-by column for thereby progressively marking on the surface the corresponding graphic's lines, thusly, also marking the pixels within said lines. Likewise, for performing grayscale laser marking typically each pixel of the graphic has a specific color value that is measured in a grayscale, and the controller controls the power or the speed of the laser according to the color of each pixel, such that the energy transferred on the surface on each point of the object may vary according to the corresponding pixel value. Variations on the amount of energy transferred on the surface may cause variations on the surface's color that is changed by the action of the laser beam.

An important disadvantage of laser marking using raster graphics is that the laser marking process is slow due to the fact that the laser must be scanned in the aforementioned line-by-line fashion, even when a great part of the lines scanned concerns regions where no color change is to be caused by the laser. Therefore, the process is slow because the laser has to spend time over surface regions which are not to be altered by the laser. Therefore, typically laser marking a graphic using controllers which are configured for raster graphic based marking is done by scanning the laser beam across a path which is much longer compared to the minimum path that could be alternatively followed for marking the same graphic on the surface. A different way for laser marking graphics on the surface of an objects is vectorial marking that is based on using vector graphics.

Laser marking using vector graphics is known in the prior art. Patent application document US 2005/0171630 A1 describes laser marking graphics employing a controller that is configured for processing control information that may be in the form of a vector list. US 2005/0171630 A1 also describes that the velocity or the power of the laser beam may be controllably altered for achieving grayscale marking. However, a problem with the prior art regarding marking using vector graphics, is that in the previously known systems changing the power of the laser beam in between marking different vectors requires to pause moving the beam. This is done because the prior art does not provide a solution to the problem of how to change the laser power while the beam is moving on an object's surface, without the laser's power change causing defects on the discoloration that is caused by the laser beam on the surface. Consequently, since in the prior art the beam must be temporarily stopped for the purpose of changing the beam's power, said prior art suffers from the problem that the marking process is slowed down by the stopping of the beam's motion in between successive vectors. These problems are solved with the present invention.

Summary of the invention.

The present invention provides a solution to the problem of how to reduce the time required for laser marking a graphic on the surface of an object; said object may be a workpiece such as for example a workpiece that comprises a textile or a fabric. Likewise, said workpiece may be a garment. Moreover, the present invention provides a solution to the problem of how to change the laser power while the beam is moving on an object's surface, without the laser power change causing defects on the change that is caused by the laser beam on the surface. In addition, the present invention provides a solution to the problem of how to avoid stopping the laser beam during laser marking using vector graphics. The invention also allows for achieving a high quality laser marking, particularly grayscale marking, with good contrast, good color levels and high resolution.

The invention in its first aspect concerns a system for laser marking a graphic on an object, the system comprising:

- a laser system for producing a laser output;
- moving means for moving the laser output for the latter traveling on a surface of an object:
- a controller that is configured for:

- processing control information associated with a graphic to be laser marked, said control information comprising or concerning a plurality of vectors, the vectors being separable into two or more vector groups, each group having a corresponding marking intensity value (MI), wherein at least one of said groups has a plurality of vectors;
- for each vector setting a corresponding vector speed ($v_i$) and a corresponding vector laser power;
- controlling the laser system for setting a power of the laser output according to the vector laser power;
- controlling the moving means for setting on the surface of the object a trajectory and a speed of the laser output according to each vector and the corresponding vector speed ($v_i$), wherein for each vector the trajectory has a corresponding trajectory part,

characterized in that,

for each vector the controller sets the vector speed ($v_i$) and the vector laser power according to the marking intensity value of the corresponding vector group such that at least two vectors within one of said vector groups have with respect to each other different vector speeds and different vector laser powers, and such that the laser output's speed that is set according to said at least two vectors remains different than zero when the laser output travels along the two trajectory parts which correspond to said at least two vectors. Accordingly, it may be understood that the laser output's speed that is set according to said at least two vectors is different than zero for the entire duration that the laser output irradiates along the two trajectory parts which correspond to said at least two vectors.

The laser system for producing a laser output may preferably comprise any of the known lasers that are used for laser marking graphics on the surface of objects such as textiles. Therefore, said laser system may optionally comprise a $CO_2$ laser. Likewise, said laser system may preferably comprise other optical, electrical or opto-mechanical components for producing, shaping, directing and/or controlling the power of the laser's optical output. Said optical output preferably is a laser beam. The wavelength of the optical output may preferably be in ultraviolet, visible, near infrared, mid infrared, or infrared regions.

The moving means for moving the laser output on a surface of an object, may preferably compromise a pair of galvo mirrors which are configured to scan the laser output on a x-y plane on the surface of the object. The moving means may alternatively or complementarily comprise a stage or a mannequin for placing on it the object, said stage being configured for moving across the x-y and/or the z direction/s.

The control information that the system's controller is preferably suitable for processing may be found in or extracted from a vector graphic computer file. The control information may comprise information for each of the vectors that define the graphic. The vector may be a microvector. The control information concerning each of the vectors may comprise the coordinates of the start point and of the end point of the corresponding vector. Likewise, said information for each vector may comprise a color value for the vector. Said color value is a non-limiting example of a marking intensity value. Therefore, in one non-limiting example a vector group that is one of the aforementioned vector groups, consists of vectors or microvectors which all have the same color value associated with them in the respective control information.

Preferably, when each vector has a color value associated with it, the system is configured for controlling the velocity with which the laser moves for marking said vector. Said velocity may be controlled according to the color or mark intensity (MI) value. Preferably, the color or the marking intensity value MI is in a scale that has a maximum value FS, and a minimum marking intensity value (FM), said scale preferably being a color grayscale that has FS=255 and FM=0. Typically, but not always, an MI value of 255 may indicate that the laser power or energy when marking the corresponding vector should be minimum or zero for avoiding causing a change of the color or of the appearance of the surface's part that corresponds to the respective vector. Also typically, an MI value of 0 may indicate that the laser power or energy when marking the corresponding vector should be maximum or high for causing a maximum change of the color or appearance of the surface's part that corresponds to the respective vector. In a non-limiting example where the object on which the graphic is marked is denim, and where there is marked a grayscale graphic, an MI value of 255 corresponds to white vectors, and an MI value of 0 corresponds to black vectors of the graphic. When the graphic is marked the black vector may correspond to the denim having its original color on the respective surface part that corresponds to the black vector; this may be achieved by having the laser energy or power set to a minimum value when moving across said surface part. Similarly, when the graphic is marked the white vector may correspond to the denim having been discolored the most on the respective surface part that corresponds to the white vector; this may be achieved by having the laser energy or power set to a maximum value when moving across said surface part, thereby, causing a maximum change of the denim's appearance therein. It is possible to also have an opposite case where a black vector corresponds to a maximum discoloration or change of the corresponding surface part, and a white vector corresponds to a minimum or no discoloration or change of the corresponding surface part. Said change of the appearance of the surface of a denim may be the whitening of, or the ripping through, the denim fabric.

In practice, controlling and changing the effect imparted by the laser output on the surface of the object may complementary or alternatively be achieved by controlling the speed with which the laser output moves on the surface. This is because the energy transferred by the laser output on each part of the surface depends on the time the surface part is irradiated by the laser output. Said surface part may be the aforementioned trajectory part of the (overall) trajectory that the laser output is set to follow on the surface of the object. Optionally for increasing the effect, e.g. a bleaching, caused by the optical output on the surface, the laser output may be set to move slower on the surface. Likewise, for reducing the effect caused by the optical output on the surface, the laser output may be set to move faster on the surface. Likewise, the velocity and the power of the laser output may be controlled to change simultaneously by setting a corresponding vector speed and a corresponding vector laser power according to the corresponding marking intensity value for each vector. Therefore, for each vector said controller is also suitable for setting a corresponding vector speed and a corresponding vector laser power. Also, the controller in the system according to the invention is suitable for controlling the laser system for setting a power of the laser output according to the vector laser power. Likewise, the controller is suitable for controlling the moving means for setting on the surface of the object a trajectory and a speed of the laser output according to each vector and the corresponding vector speed, wherein for each vector the trajectory has a corresponding trajectory part. According to the above, optionally the controller is configured for decreasing the speed and/or increasing the power of the laser output for a vector that has a high marking intensity value. Similarly, optionally the controller is configured for increasing the speed and/or decreasing the power of the laser output for a vector that has a low marking intensity value. Preferably the laser ouput may be a laser beam.

A feature of the present invention is that for each vector the controller sets the vector speed and the vector laser power according to the marking intensity value of the corresponding vector group such that at least two vectors within one of said vector groups have with respect to each other different vector speeds and different vector laser powers. Preferably each of a plurality of the vector groups, or each of all the vector groups, has two corresponding vectors that similarly to above have with respect to each other different vector speeds and different vector laser powers. Having within the same group two vectors of different vector speeds and different vector laser powers means that for each of said two vectors the speed and the power can be adapted to achieve the same marking intensity which is the marking intensity of the group. Therefore, when having to mark a sequence of different vectors of different marking intensities, said vectors belonging to different groups, it is not necessary to stop the laser output's motion in between the different groups for changing the speed and/or the power of the laser output. Instead, since the speed and power is simultaneously changed within each vector group, it is possible that when approaching finishing marking the vectors of one group, the speed within the first vector group may be progressively adjusted to match the speed with which the marking of the next vector group should ideally start according to the laser marking intensity of the second group. Similarly, the power within the first vector group may be progressively adjusted to match the power with which the marking of the next vector group should ideally start according to the laser marking intensity of the second group. Advantageously, said progressive adjustments do not adversely affect the quality of the marking of the vectors of each group, because a change of the speed may be accompanied by a change of the power to offset the effect of the speed change on the intensity of the laser marking on the object's surface. Similarly, vice versa, a change of the power may be accompanied by a change of the speed. Overall, by not having to stop the laser output's motion between marking different vectors and different vector groups, the overall speed and productivity of the marking process are increased without compromising the quality of the marking. Since the motion of the laser output does not have to be stopped in between marking two groups or/and in between marking vectors of different vector power and different vector speed within the same vector group, the laser output's speed that is set by the controller according to said at least two vectors remains different than zero when the laser output travels along the two trajectory parts which correspond to said at least two vectors. This is a significant improvement compared to the prior art, and allows for marking graphics faster.

In a preferred embodiment of the system according to the present invention, the controller is configured to further set the trajectory according to a series of the vector groups, said series comprising a particular vector group and a subsequent vector group that follows (i.e. is next to) the particular vector group in said series, the particular and the subsequent vector groups having different with respect to each other marking intensity values, and wherein at least two vectors in the particular vector group and at least one or at least two vectors in the subsequent vector group form all together a subseries and have with respect to each other different vector speeds and/or different vector laser powers, the controller being configured for setting said different vector speeds and/or different vector laser powers such that in said subseries the vector speed changes (e.g. decreases or increases) monotonically, and/or such that in said subseries the vector laser power changes monotonically. Therefore, the controller may set the moving means to move the laser output for marking first the vectors of the aforementioned particular group, and for marking subsequently the vectors of the subsequent vector group. In a non-limiting example, when the last two vectors of the first (e.g. particular) group are marked, then subsequently there should be marked the first two vectors of the second and subsequent vector group. As explained further above, the invention allows for the vector speed values and/or vector power values to change progressively and smoothly when moving from one vector to the next one. Therefore, in the optional case that said vector speed changes monotonically, then the way the moving means progressively changes the speed with which the laser output moves over the surface is optimized such that the speed is well controlled and the problems associated with the potential inertia of the moving means are avoided. Likewise, in the optional case that said vector laser power changes monotonically, then the way with which the laser system progressively changes the laser power is optimized, such that the power and its changes are accurately controlled, and there are avoided problems associated with any potential inability of the laser system to rapidly change by a large amount the laser power. This may be required in the case that the rise and/or fall time of the laser is/are slow with respect to what is required for changing rapidly the laser power by a large amount. It may also help avoiding defects associated with the laser energy/power overshooting or undershooting which is something that often happens in the prior art when a laser system is instructed by the controller to increase or decrease rapidly the laser power. As is known, having a monotonic increase or decrease of the laser power, means increasing or decreasing, respectively, the laser power without in the process respectively decreasing or increasing the laser power. Similarly, having a monotonic increase or decrease of the vector speed, means increasing or decreasing, respectively, the vector speed without in the process respectively decreasing or increasing the vector speed.

In a preferred embodiment of the system according to the first aspect of the invention, the laser output is pulsed, and for controlling the power of the laser output the laser system is configured for changing a duty cycle of the laser system. Advantageously, changing the duty cycle may allow for controlling the laser power in a simple and easy to implement way.

In the system of the first aspect of the invention, optionally the vector speed ($v_i$) depends on a length (D) of the trajectory part that corresponds to the vector, an exposition time ($t_E$) that corresponds to duration of the laser output irradiating the object's surface while said laser output travelling across said trajectory part, a maximum marking intensity value (FS) that the marking intensity value (MI) of the corresponding vector group can acquire, and a correction factor (LEQi) which is related to the laser system, according to the formula:

$$v_i = \frac{D}{t_E} * \frac{FS}{FS-MI} * LEQi \quad \text{, Equation 1}$$

The exposition time $t_E$ may be the time it takes for the laser output, e.g. the laser beam, to travel the entire vector with the laser emitting. Therefore, if the laser output is pulsed, and the pulsed laser output travels the vector over a period of time during which the laser is actually emitting and radiating the object's surface only for a first sub-period of time and is not emitting nor radiating the surface for second sub-period, then the exposition time would preferably be equal to the first sub-period. Therefore, preferably for estimating the exposition time there is taken into account only the time the laser is actually ON and emitting and irradiating the object's surface while the moving means move the laser output across the vector in the overall trajectory, and there is disregarded the time that the laser output is OFF or not irradiating the surface while said output is being moved. The length D is essentially the length of the vector on the surface on which the laser marks the graphic. As indicated further above, for grayscale scribing, i.e. for marking grayscale graphics, preferably FS=255 or FS may be equal to the maximum marking intensity value which may be further equal to the maximum value of the color that may correspond to the vector. Preferably, the correction factor LEQi is used for adjusting the relation between the laser emission time and the emitted laser power.

Considering how widely used raster graphics are, there is contemplated the option of converting a raster graphic into the control information. For this reason, the system of the first aspect of the invention may preferably comprise a computer configured for converting a raster graphic into the control information. The raster graphic may be in any known digital format. This may render the system suitable for laser marking graphics which are initially created and/or provided as raster graphic computer files. The computer may preferably be connected to the controller such that control information can be passed from the computer to the controller.

The speed of the motion of the laser output may be limited by the technical specification of the moving means. For example, if the moving means comprise a set of galvo mirrors, the galvo motors that move the mirrors may have a maximum rotation speed which may not be exceeded according to the specification of the galvos. That would pose an upper limit on the speed with which the laser output may move on the object's surface, and consequently, it may pose an upper limit on the vector speed that is set by the controller. When there is such an upper limit, i.e. when there is a maximum allowable value ($v_{max}$) for the vector speed, the controller may optionally be configured so that the vector speed will always be equal to or smaller than said maximum value $v_{max}$, or so that if the controller calculates in the first instance a vector speed that is larger than $v_{max}$ then it corrects or resets or recalculates said vector speed such that it is equal or smaller than $v_{max}$. That would allow for the moving means to be operated within their technical specifications, and consequently would allow for having vector speeds which can be correctly and controllably implemented by the system. This may offer the advantage that the actual speed with which the optical output moves when the system operates is as close as possible, and ideally is identical, to the vector speed set by the controller, so that the graphic that is laser marked is according to the control information and is not distorted. Therefore, in the system according to the first aspect of the invention, preferably the controller sets the vector speed ($v_i$) to be equal to or smaller than a maximum speed ($v_{max}$). Further optionally and preferably in the system according to the invention, when for at least one of the vectors the corresponding vector speed ($v_i$) is about equal to said maximum speed ($v_{max}$), the controller is configured to further control the laser system for correcting the power or the vector laser power of the laser output. In the latter case, the controller may be configured to correct the laser's power or the vector power, especially in the optional case that in an original calculation said laser's power or vector power have been set by the controller considering an initial $v_i > v_{max}$ and without considering that $v_i$ may not be more than $v_{max}$. This may happen for example in the optional case that the controller is set to originally (e.g. in the first instance) calculate the $v_i$ without taking into account the existence of a maximum allowable $v_{max}$ value. For these optional cases, it is useful to preferably have in place measures so that the vector speed and the vector power or laser power are set or reset according to the technical specifications of the moving means and/or of the laser system.

As mentioned, preferably the laser system produces a pulsed optical output that comprises pulses. The laser system may receive a modulation signal that determines a pulse emission period of said pulses. In many but not all cases, the frequency at which these pulses are emitted may correspond to the inverse of the time it takes to travel one vector; in these cases, effectively there may be one pulse per vector. However, the actual modulation to control the laser power may preferably be in a higher frequency than the one determined by said inverse of the time it takes to travel one vector; this advantageously allows for having several pulses per vector, for thereby better controlling the vector power and also for having a more homogeneously marked vector. Therefore, in the system according to the first aspect of the invention optionally and preferably the laser output is pulsed comprising a number of pulses per vector, said number being 1 or higher, and the laser system which produces the pulsed optical output is configured to change the number of pulses per vector. Likewise, optionally and preferably, the laser output is pulsed and the controller is configured to cause a change in a modulation signal that is applied on the laser system which produces the pulsed optical output, wherein said modulation signal modulates the power of the pulsed laser output and/or modulates the number of pulses per vector. Further preferably said controller is configured to cause said change in the modulation signal, for the purpose of correcting the power of the laser output. The power of the laser output may have to be corrected in the aforementioned optional case where for accounting for a maximum vector velocity the laser power should be corrected.

The invention in its second aspect concerns a method for laser marking a graphic on an object, the method comprising:

- producing a laser output by means of a laser system;
- moving the laser output using moving means such that the laser output travels on a surface of an object;
- processing control information associated with a vector graphic to be laser marked, said control information comprising or concerning a plurality of vectors, the vectors being separable into two or more vector groups, each group having a corresponding marking intensity value (MI), wherein at least one of said groups has a plurality of vectors;
- for each vector setting a corresponding vector speed ($v_i$) and a corresponding vector laser power;
- controlling the laser system for setting a power of the laser output according to the vector laser power;
- controlling the moving means for setting on the surface of the object a trajectory and a speed of the laser output according to each vector and the corresponding vector speed ($v_i$), wherein for each vector the trajectory has a corresponding trajectory part,

characterized in that,
for each vector setting the vector speed ($v_i$) and the vector laser power according to the marking intensity value of the corresponding vector group such that at least two vectors within one of said vector groups have with respect to each other different vector speeds and different vector laser powers, and such that the laser output's speed that is set according to said at least two vectors remains different than zero when the laser output travels along the two trajectory parts which correspond to said at least two vectors.

Laser marking the graphic on an object may be scribing or forming said graphic on the surface of the object by means of the laser (the laser output). The method may be implemented using the system of the first aspect of the invention. Therefore, the aforementioned optional or preferred features of the system, may also be considered as being correspondent optional or preferred features of the method of the second aspect of the invention.

Brief description of Drawings

FIG. 1 shows a preferred embodiment of the system according to the invention.

FIG. 2 shows an example of a graphic that can be marked according to the invention; the graphic in FIG. 2 is a line comprising three segments of different gray levels.

FIG. 3 shows a typical $CO_2$ laser response.

FIG. 4 shows non-limiting examples of how the power of the laser output may be modified in an embodiment according to the invention.

FIG. 5 shows a non-limiting example of a laser output scanning for a vectorial image marking done according to the present invention, and an example of a traditional raster marking done line-by-line.

<u>Detailed Description of the Invention.</u>

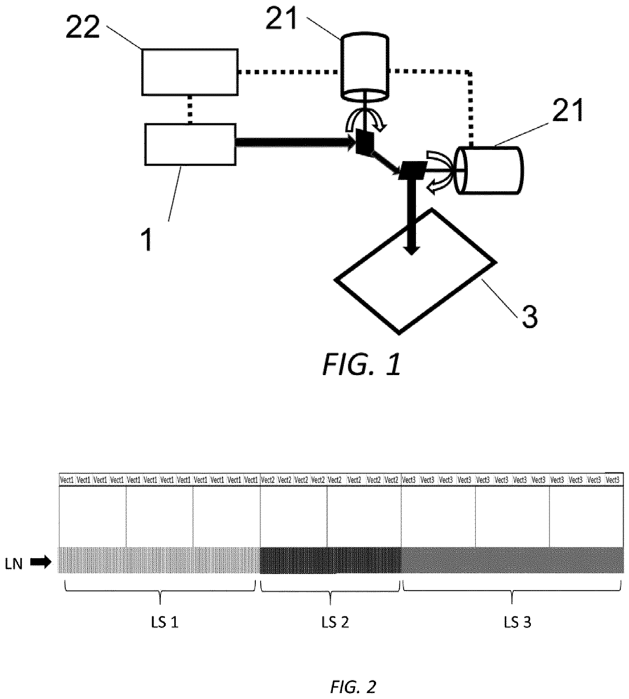

FIG. 1 schematically shows a preferred embodiment of the system according to the first aspect of the invention. The system in FIG. 1 comprises a laser system 1 for producing a laser output, moving means 21 which in this case comprises a pair of galvo scanning mirrors 21 for moving (scanning) the laser output on a surface of an object 3. In the system of FIG. 1 the laser output is a laser beam. In a preferred embodiment where the object is a textile, during the marking process the optical output impinges (hits) on and scans over the surface of the textile 3. The optical output traveling from the laser system towards the surface of the object is indicated by the thick arrows in FIG. 1. In addition, the system of FIG. 1 comprises an electronic controller 22 that is connected to (the connections are schematically indicated in FIG. 1 with dotted lines) and configured to control the laser system 1 and the galvo scanning mirrors 21. In the system of FIG. 1 the controller 22 is connected to a computer (not shown) in which the user may create or insert a digital file that contains control information associated with a graphic to be laser marked, said control information comprising or defining a plurality of vectors, the vectors being separable into two or more vector groups, each group having a corresponding marking intensity value (MI), wherein at least one of said groups has a plurality of vectors. Preferably said digital file may be an image/drawing/pattern/indicia/graphic to be marked on the textile, said image/drawing/pattern/indicia/graphic being vector based. The controller 22 is configured for processing said control information. Therefore, in the preferred embodiment of FIG. 1 the control information is passed from the computer to the controller 22 which is further configured for the following: for each vector the controller 22 sets a corresponding vector speed $v_i$ and a corresponding vector laser power; the controller 22 controls the laser system 1 for setting a power of the laser output according to the vector laser power; the controllers controls the moving means 21 for setting on the surface of the object a trajectory and a speed of the laser output according to each vector and the corresponding vector speed $v_i$, wherein for each vector the trajectory has a corresponding trajectory part.

A non-limiting example of the operation of the controller of the system of FIG.1 is presented below, starting with Table 1 which shows that the control information related to a non-limiting example of a graphic to be marked comprises 3 vector groups, wherein the graphic is a line LN consisting of three differently colored line segments LS1-LS3 as shown in FIG. 2. The color of said line segments is measured in a grayscale from 0 to 4, and in the shown example each of the vector groups of Table 1 has a corresponding grayscale value which corresponds to the corresponding vector group's marking intensity value.

**Table 1**

| Vector Group | Marking Intensity | Grey Scale [0 to 4] |
|---|---|---|
| 1 | 1 | 1 |
| 2 | 3 | 3 |
| 3 | 2 | 2 |

In the example of Table 1 and FIG. 2, the controller calculates the laser beam movement speed of each vector, meaning that the controller sets the vector speed for each vector. In the same example, the vector speed depends on the colour or grey scale level of the line segment of each group and the desired maximum marking intensity set by the user.

Each of the vector groups of Table 1 comprise at least one vector, and at least one of the vector groups comprises two or more vectors. Each vector of the vector groups has a corresponding vector distance (Vec. Distance) which is the length of the vector on the surface on which the graphic is to be marked. Preferably all the vectors of the vector groups have the same vector distance. The vector distance is typically measured or expressed in millimetres. In the optional and preferable case that the vector distance is the same for all vectors, the vector distance depends on the resolution of the marking, wherein said resolution is the number of vectors per unit length. Hence, preferably the vector distance is correlated with the resolution via the following relationship:

$$Vec.Distance\ (mm) = \frac{25{,}4\left[\frac{mm}{inch}\right]}{Resolution\left[\frac{pixels}{inch}\right]}$$

, Equation 2.

Preferably the vector speed $v_i$ for a vector *i* marked with the system of FIG. 1 according to the example related to Table 1, is determined according to the formula:

$$VectorSpeed\ (i)\left[\frac{mm}{s}\right] = \frac{Vec.Distance\ (mm)}{ExpositionTime\ (s)} * \frac{FS}{FS - GreyScaleLevel\ (i)} * LaserEQ\ (i)$$

, Equation 3

Equation 3 in view of equation 2 may become:

$$VectorSpeed\ (i)\left[\frac{mm}{s}\right] = \frac{\dfrac{25{,}4\left[\frac{mm}{inch}\right]}{Resolution\left[\frac{pixels}{inch}\right]}}{ExpositionTime\ (s)} * \frac{FS}{FS - GreyScaleLevel\ (i)} * LaserEQ\ (i)$$

, Equation 4.

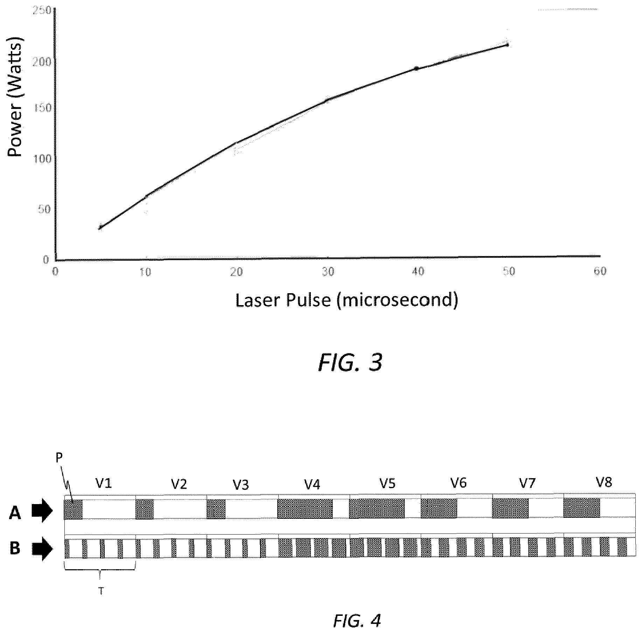

In equations 3 and 4 the exposition time corresponds to the duration of the laser output irradiating the object's surface while said laser output travels across the trajectory part that corresponds to the vector *i* on the surface of the object; hence the trajectory part has a length that is equal to the vector distance. Also, in equations 3 and 4 FS is the maximum grayscale colour value that a grayscale level of the vector may acquire in the aforementioned example related to table 1. In the herein described example, the grayscale level for vector *i* can be considered as expressing the marking intensity MI of the vector group in which vector *i* belongs. LaserEQ(i) in equations 3 and 4 is a correction factor to adjust the relation between the Laser Emission Time and the emitted laser power. It is often, but not always, required to consider the laser equalization correction factor LaserEQ(i) because often the laser power is not linearly dependent on the laser emission time, in which case for each grey scale value a correction factor is preferably used. A typical $CO_2$ laser response is showed in FIG. 3.

In the optional and preferred case of working with grayscale graphics using a colour scale that has 255 grey scale levels, i.e. when FS= 255 because the grayscale value may be from 0 to 255, then equation 4 becomes:

$$VectorSpeed\ (i)\left[\frac{mm}{s}\right] = \frac{Vec.Distance\ (mm)}{ExpositionTime\ (s)} * \frac{255}{255 - GreyScaleLevel\ (i)} * LaserEQ\ (i)$$

$$= \frac{\dfrac{25{,}4\left[\frac{mm}{inch}\right]}{Resolution\left[\frac{pixels}{inch}\right]}}{ExpositionTime\ (s)} * \frac{255}{255 - GreyScaleLevel\ (i)} * LaserEQ\ (i)$$

, equation 5.

Expressing the vector speed as $v_i$, the vector distance as D which is the length of the trajectory part that corresponds to the vector, the exposition time as $t_E$ that corresponds to duration of the laser output irradiating the object's surface while said laser output travelling across said trajectory part, as well as considering that FS is a maximum marking intensity value that the marking intensity value MI of the corresponding vector group can acquire, and expressing the laser correction factor as LEQi, then from equation 6 it can be derived that in the embodiment of FIG. 1 the vector speed is set according to the aforementioned equation 1:

$$v_i = \frac{D}{t_E} * \frac{FS}{FS - MI} * LEQi$$

Hence, the vector speed $v_i$ may acquire different values depending on the marking intensity MI value of the vector's vector group. In the previous example related to Table 1, the vector speed may vary between a high value, a medium value and a low value, as shown in Table 2:

**Table 2**

| Vector Group | Marking Intensity | Vector Speed |
|---|---|---|
| 1 | 1 | High |
| 2 | 3 | Low |
| 3 | 2 | Medium |

Preferably after the speed in each vector is set, then the laser ON and OFF times are calculated for each vector; this calculation is very useful for the embodiment of FIG. 1 because the mirrors that moves the laser beam may have a maximum speed, and is possible that a speed that is calculated only on the basis of equation 1 will be out of the possible range of the mirrors and of the overall hardware of the system. Hence, a preferred calculation method is the following:

$$If\ Speed\ (vector) < MaximumSpeed;$$

$$then: LaserOffTime\ (vector) = 0,$$

and,

$$If\ Speed\ (vector) > MaximumSpeed;$$

$$then: LaserOffTime\ (vector) = \frac{Distance}{MaximumSpeed} - \frac{Distance}{Speed\ (vector)}$$

, Equation 6

This above means that if the maximum speed is lower than the vector speed that is calculated according to any of equation 1, 3-5, then as the laser beam will move at its maximum speed without being able to go any faster, this will increase the real exposition time in the vector, and to compensate the laser will be off during a period of time, called above LaserOffTime, in order to maintain the original exposition time and keep this way the delivery of energy in that vector.

When optionally the laser output is pulsed, i.e. comprises laser pulses, then to prevent marking defects the laser off time can be divided (i.e. distributed) between the different laser pulses during the vector.

Therefore, in the embodiment of FIG. 1 if the vector speed $v_i$ is larger than a maximum speed $v_{max}$, then the controller is configured to further control the laser system for correcting the power of the laser output. Similarly, in an embodiment of the system according to the present invention the controller sets the vector speed $v_i$ to be equal to or smaller than a maximum speed $v_{max}$, and when for at least one of the vectors the corresponding vector speed $v_i$ is about equal to said maximum speed $v_{max}$, the controller is configured to further control the laser system for correcting the power of the laser output.

Once the real laser beam speed is set, e.g. is calculated, then preferably a next step followed by the controller is calculating the acceleration of the laser beam. This calculation may be very useful in the system of FIG. 1 because galvo mirrors that move the laser beam may have a maximum capacity of acceleration, so it may not be possible to do changes of speed with zero transition time. It is noted that the acceleration may happen at the same time in two axes of the laser beam movement.

Usually, the time required for the laser beam to change the speed is called "acceleration time"; in some galvanometer-based systems that may be used in an embodiment of the present invention the acceleration time is constant for most of the speed changes and depends on the defined "Tracking Error" as follows:

$$Acceleration\ Time\ [s] = 2 * Tracking\ Error\ [s]$$

, equation 7.

In equation 7 the acceleration time and the tracking error as measured in seconds (s).

Preferably to keep the control of the position and speed of the laser beam the controller updates the position of the laser beam in a cycle time/period usually of 10μs, this period could be higher or lower depending on the performance of the actual controller. Each of these small steps of position may be called "Microvector" or "Acceleration microvector". A microvector (acceleration microvector) is a vector.

As the acceleration time is preferably known before reaching a transition point between two vectors, the speed of the laser beam preferably is gradually modified during the transitions by reducing or increasing the speed as may be required.

The number of microvectors, said vectors also called "acceleration microvectors", that may be needed to do a change of speed is preferably determined by the following equation:

$$Acceleration\ Microvectors = \frac{2 * Tracking\ Error\ [s]}{Microvector\ Duration\ [s]}$$

, equation 8.

Optionally and preferably the microvector duration is constant, and further preferably is 10 μs, in which case equation 8 becomes:

$$Acceleration\ Microvectors = \frac{2 * Tracking\ Error\ [s]}{10\mu s}$$

, equation 9.

When having a set of several acceleration microvectors for achieving a change in speed between two consecutive vector groups which belong to a series of vector groups, then preferably an acceleration microvector of the set may belong to a first or current vector group of said two consecutive vector groups, and one or more subsequent acceleration microvectors of the set may be at the beginning of the next or subsequent vector group of the two vector groups. Said set of the several acceleration microvectors for achieving the change in speed between the two consecutive vector groups, is essentially a subseries of vectors that belongs to the series of all the vectors of the corresponding vector group series. The proportion in which the acceleration microvectors of the subseries may be distributed between the two vector groups of the series may vary; according to tests done by the inventors, the best compromise between marking quality and performance is achieved when 50-70% of the subseries's acceleration microvectors belong in one of the first (current) or the second (next or subsequent) vector group, and the other 30-50% of the set's acceleration microvectors belong to the other one of the first or second vector group. In a non-limiting example, good marking quality and performance were achieved when 50% of the subseries' microvectors were in the first vector group, and 50% of the subseries microvectors were in the second group. The way with which said acceleration microvectors may be distributed between two consecutive vector groups may depend on the system moving the laser beam or on the laser system itself.

Preferably the vector speed of each of the microvectors can be calculated according to the following formula which correlates the "speed (i)" in a vector *i*, with the "speed (i-1)" of the vector *i-1* which immediately precedes vector *i*:

$$Speed\ (i)\ \left[\frac{m}{s}\right] = Speed(i-1)\ \left[\frac{m}{s}\right] + \frac{Speed(i-1)\ \left[\frac{m}{s}\right] - Speed(i)\ \left[\frac{m}{s}\right]}{Acceleration\ Microvectors}$$

, equation 10.

In the optional case of having a constant microvector duration and having the number of acceleration microvectors determined according to equation 9, then equation 10 can be rewritten as follows:

$$Speed\ (i)\ \left[\frac{m}{s}\right] = Speed(i-1)\ \left[\frac{m}{s}\right] + \frac{Speed(i-1)\ \left[\frac{m}{s}\right] - Speed(i)\ \left[\frac{m}{s}\right]}{\dfrac{2*Tracking\ Error\ [s]}{10\mu s}}$$

, equation 10.

In the example described by Tables 1 and 2 and FIG. 2, there is the following relationship: Low Speed = 0.5x Medium Speed = 0.25x High Speed.

Moreover, in the example described by Tables 1 and 2 and FIG. 2, it is noted that D1/D2/D3=3/2/3 where D1 is the total distance (length) of the vectors (microvectors) in Vector group 1, D2 is the total distance (length) of the vectors (microvectors) in Vector group 2, and D3 is the total distance (length) of the vectors (microvectors) in Vector group 3.

Each of the vector groups may comprise a different number of vectors. The length of a vector (microvector) may be different between different vector groups. In the specific example described by Tables 1 and 2 and FIG. 2, there are 6 microvectors in vector 1, 8 microvectors in vector group 2, and 9 microvectors in vector group 3, and the vector speeds and vector powers set by the controller for each of the vectors (microvectors) in these three vector groups is shown in Table 3:

**Table 3**

| Vector Group | Marking Intensity | Vector Speed | Microvector | Vector Speed | Vector Power |
|---|---|---|---|---|---|
| 1 | 1 | High | 1a | 1.0x High | 100% |
| | | | 1b | 1.0x High | 100% |
| | | | 1c | 0.9x High | 90% |
| | | | 1d | 0.7x High | 70% |
| | | | 1e | 0.5x High | 50% |
| | | | 1f | 0.3x High | 30% |
| 2 | 3 | Low | 2a | 1.0x Low | 100% |
| | | | 2b | 1.0x Low | 100% |
| | | | 2c | 1.0x Low | 100% |
| | | | 2d | 1.0x Low | 100% |
| | | | 2e | 1.0x Low | 100% |
| | | | 2f | 1.0x Low | 100% |
| | | | 2g | 1.0x Low | 100% |
| | | | 2h | 1.0x Low | 100% |
| 3 | 2 | Medium | 3a | 0.5x Medium | 50% |
| | | | 3b | 0.7x Medium | 70% |
| | | | 3c | 0.8x Medium | 80% |
| | | | 3d | 0.9x Medium | 90% |
| | | | 3e | 1.0x Medium | 100% |
| | | | 3f | 1.0x Medium | 100% |
| | | | 3g | 1.0x Medium | 100% |
| | | | 3h | 1.0x Medium | 100% |
| | | | 3i | 1.0x Medium | 100% |

In Table 3 each of "High", "Low" and "Medium" respectively corresponds to the High speed value, the Low speed and the Medium speed value. These values are usually, but not always, measured or expressed in mm/s. As is obvious, in Table 3 "0.5x High" means 0.5 times the High Speed value.

The vector power in Table 3 is the laser power that is set for each of the microvectors and is expressed as a percentage of a maximum laser power value. Hence, in the example of Table 3 a vector power that is 70% has a value that is 70% of the value of said maximum laser power.

From Table 3 it can be seen that in vector group 1 there are at least two vectors, e.g. vectors 1e and 1f, for which the controller of the system of Fig. 3 sets the vector speed and the vector laser power according to the marking intensity value of the corresponding vector group 1 such that said least two vectors (e.g. vectors 1e and 1f) within vector group 1 have with respect to each other different vector speeds and different vector laser powers. In the same example when the system marks vectors 1b to 1f on the surface of the object, the speed with which the laser beam travels on the surface of the object does not drop to zero while the laser beam hits said surface. Hence, the laser output's speed that is set according to the aforementioned at least two vectors (e.g. vectors 1e and 1f) remains different than zero when the laser output irradiates and travels along the two trajectory parts which correspond to said at least two vectors.

In Table 3 it can also be observed that vectors 1 e and 1f from the particular vector group 1 and vector 2a from the subsequent vector group 2 form a subseries, wherein the particular and the subsequent vector groups 1 and 2 have different with respect to each other marking intensity values, and wherein the vectors 1 e, 1f and 2a have with respect to each other different vector speeds, the vector speeds changing, more specifically decreasing, monotonically going from 1e to 2a, because the vector speed in 1 e is 0.5xHigh, the vector speed of 1f is 0.3xHigh which is smaller than 0.5xHigh, and the vector speed of 2a is 1 xLow=0.25High which is smaller than 0.3xHigh; this has happened because the controller of the system of FIG. 1 that is associated with the example of Table 3, is configured for setting the different vector speeds as described above.

FIG. 4. illustrates non-limiting examples of how the power of the laser output may be modified. In the example of FIG. 4 the laser output comprises pulses, and there are 8 consecutive vectors V1-V8 to mark, wherein the time T required for marking each of V1-V8 is constant, and wherein for each of V1-V3 the vector power is 25% of a full power value, for each of V4-V5 the vector power is 75% of the full power value, and for each of V6-V8 the vector power if 50% of the full power value. One contemplated way of modifying the laser power is as visually described in the direction (row) A in FIG. 4 where it is seen that there is a stream of laser pulses P with a constant period that is equal to T. So in A of FIG 4 each pulse corresponds to a vector of the image to mark, and the duty cycle is modified by the laser system which produces the laser pulses according to the vector power which in turn, in this example, is set according to the corresponding color or grey level of the image. Therefore, in the case of A of FIG. 4 the laser output is pulsed, and for controlling the power of the laser output the laser system is configured for changing a duty cycle of the laser system. It is noted that in A of FIG. 4 the vector processing capacity is defined by the possible changes of duty cycle.

Direction/row B in FIG. 4 shows an alternative way to control the laser power. In the case of B in FIG. 4, the actual modulation to control the laser power is in a higher frequency compared to A, so that in B there are four laser pulses per vector. Compared to A, in B the modulation frequency has been multiplied by 4 but the changes of duty cycle happen with the same frequency as in A, thusly keeping in B the same vector processing capacity as in A. It is contemplated that the controller and/or the laser system in a preferred embodiment of the system according to the present invention, may be configured to control the number of laser pulses per vector, said number being 1 or higher. For example, the system may be configured to change between mode A and mode B. The number of pulses per vector may be controlled and changed by changing a modulation signal that may be applied on the laser system which produces the aforementioned pulsed optical output, wherein said modulation signal may modulate the power of the pulsed laser output. Said modulation signal may be controlled or changed by an appropriately configured controller.

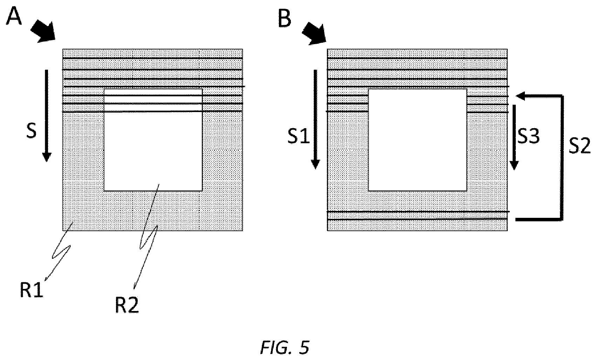

FIG. 5 shows an example from which it can be understood how a vectorial image marking that is done according to the present invention may in principle be done faster than a traditional raster marking done line-by-line. FIG. 5 shows a graphic to be marked, the graphic consisting of a rectangle that has a portion R1 that is gray colored (gray color in FIG. 4 is indicated by the textured fill) and corresponds to a region where the laser output must affect, e.g. discolor, the surface of an object, and of a central square portion R2 that is not colored and corresponds to another region where the laser output must not affect the surface of the object. The traditional raster marking with the laser beam scanning the surface of the object line-by-line entails that the laser beam after scanning every line (the thick lines on FIG. 5) progressively moves towards the direction S as shown in A of FIG. 5. The disadvantage of marking as shown A in FIG. 5, is that the process is slow because the laser output unnecessarily is scanned across R2 where it is not supposed to cause any change on the object's surface. However, when using vectorial image marking for forming the same graphic on the object as shown in B of FIG. 5, the laser beam may first move following the general direction S1, then move following the general direction S2 and then finally move following the general direction S3, thereby scanning R1 without moving on R2. Hence, the vectorial marking may be much faster compared to the traditional raster marking.

Although the controller of the system according to the present invention is based in processing vectors, the image marking process may optionally start using a raster image that contains pixels which indicate the energy levels that need to be applied to the material. The image may be processed, e.g. with a computed that preferably is part of the system and communicates with the controller, using a known in the art algorithm to detect adjacent pixels of similar colour or greyscale values, and group them. Then, an also known in the art fastest path selection algorithm may be applied to find the most time-efficient route. An example of a known bitmap to vectorization algorithm is provided by the AutoTrace program that is available online for converting bitmap to vector graphics. (http://autotrace.sourceforge.net/).

A preferred embodiment of the method according to the second aspect of the invention is implemented on the basis of the described above function and operation of the preferred embodiment of the system which is according to the first aspect of the invention and can be used for implementing said method. While the foregoing is directed to embodiments of the present invention, other and further embodiments of the invention may be devised without departing from the basic scope thereof. Those skilled in the art will understand that the embodiments disclosed here are non-limitative examples, and other embodiments are possible within the scope or the claims, for example but not limited to, different sequences of the method steps or different combinations of technical features.

**Claims**

1. A system for laser marking a graphic on an object, the system comprising:

   - a laser system for producing a laser output;
   - moving means for moving the laser output for the latter traveling on a surface of an object:
   - a controller that is configured for:

     • processing control information associated with a graphic to be laser marked, said control information comprising or concerning a plurality of vectors, the vectors being separable into two or more vector groups, each group having a corresponding marking intensity value (MI), wherein at least one of said groups has a plurality of vectors;
     • for each vector setting a corresponding vector speed ($v_i$) and a corresponding vector laser power;
     • controlling the laser system for setting a power of the laser output according to the vector laser power;
     • controlling the moving means for setting on the surface of the object a trajectory and a speed of the laser output according to each vector and the corresponding vector speed ($v_i$), wherein for each vector the trajectory has a corresponding trajectory part,

   **characterized in that**,
   for each vector the controller sets the vector speed ($v_i$) and the vector laser power according to the marking intensity value of the corresponding vector group such that at least two vectors within one of said vector groups have with respect to each other different vector speeds and different vector laser powers, and such that the laser output's speed that is set according to said at least two vectors remains different than zero when the laser output travels along the two trajectory parts which correspond to said at least two vectors.

2. A system according to claim 1, wherein the controller is further configured to set the trajectory according to a series of the vector groups,
   said series comprising a particular vector group and a subsequent vector group that follows the particular vector group in said series,
   the particular and the subsequent vector groups having different with respect to each other marking intensity values, and wherein at least two vectors in the particular vector group and at least one or two vectors in the subsequent vector group form a subseries and have with respect to each other different vector speeds and/or different vector laser powers,
   the controller being configured for setting said different vector speeds and/or different vector laser powers such that in said subseries the vector speeds change monotonically, and/or such that in said subseries the vector laser powers change monotonically.

3. A system according to any of the previous claims, wherein the laser output is pulsed, and for controlling the power of the laser output the laser system is configured for changing a duty cycle of the laser system.

4. A system according to any of the previous claims wherein the vector speed ($v_i$) depends on a length (D) of the trajectory part that corresponds to the vector, an exposition time ($t_E$) that corresponds to duration of the laser output irradiating the object's surface while said laser output travelling across said trajectory part, a maximum marking intensity value (FS) that the marking intensity value (MI) of the corresponding vector group can acquire, and a correction factor (LEQi) which is related to the laser system, according to the formula:

$$v_i = \frac{D}{t_E} * \frac{FS}{FS - MI} * LEQi$$

5. A system according to any of the previous claims, further comprising a computer configured for converting a raster graphic into the control information.

6. A system according to any of the previous claims, wherein the marking intensity value (MI) is in a scale that has a maximum marking intensity value (FS) and a minimum marking intensity value (FM), said scale preferably being a color grayscale that has FS=255 and FM=0.

7. A system according to any of the previous claims, wherein the controller sets the vector speed ($v_i$) to be equal to or smaller than a maximum speed ($v_{max}$), and wherein when for at least one of the vectors the corresponding vector speed ($v_i$) is about equal to said maximum speed ($v_{max}$), the controller is configured to further control the laser system for correcting the power of the laser output.

8. A system according to any of the previous claims, wherein when for at least one of the vectors the corresponding vector speed ($v_i$) is larger than a maximum speed ($v_{max}$), the controller is configured to further control the laser system for correcting the power of the laser output.

9. A system according to any of the previous claims, wherein the laser output is pulsed comprising a number of pulses per vector, said number being 1 or higher, and the laser system which produces the pulsed optical output is configured to change the number of pulses per vector.

10. A method for laser marking a graphic on an object, the method comprising:

- producing a laser output by means of a laser system;
- moving the laser output using moving means such that the laser output travels on a surface of an object;
- processing control information associated with a vector graphic to be laser marked, said control information comprising or concerning a plurality of vectors, the vectors being separable into two or more vector groups, each group having a corresponding marking intensity value (MI), wherein at least one of said groups has a plurality of vectors;
- for each vector setting a corresponding vector speed ($v_i$) and a corresponding vector laser power;
- controlling the laser system for setting a power of the laser output according to the vector laser power;
- controlling the moving means for setting on the surface of the object a trajectory and a speed of the laser output according to each vector and the corresponding vector speed ($v_i$), wherein for each vector the trajectory has a corresponding trajectory part,

**characterized in that**,
for each vector setting the vector speed ($v_i$) and the vector laser power according to the marking intensity value of the corresponding vector group such that at least two vectors within one of said vector groups have with respect to each other different vector speeds and different vector laser powers, and such that the laser output's speed that is set according to said at least two vectors remains different than zero when the laser output travels along the two trajectory parts which correspond to said at least two vectors.

11. A method according to claim 10, wherein the object is or comprises a textile, preferably a denim fabric.

FIG. 1

FIG. 2

FIG. 3

FIG. 4

FIG. 5

Europäisches
Patentamt

European
Patent Office

Office européen
des brevets

# EUROPEAN SEARCH REPORT

**Application Number**

EP 21 38 2330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 100 341 708 C (XINGCHEN ELECTRI POWER ELECTRO [CN]) 10 October 2007 (2007-10-10) * the whole document * ----- | 1-11 | INV. G05B19/19 B23K26/08 B23K26/082 D06C23/02 |
| A | WO 2020/025771 A1 (SEI S P A [IT]) 6 February 2020 (2020-02-06) * the whole document * ----- | 1-11 | |
| A | EP 1 832 375 A1 (MACSA ID SA [ES]) 12 September 2007 (2007-09-12) * the whole document * ----- | 1-11 | |
| A | US 2019/345658 A1 (CARBONELL MADERN JOSEP MARIA [ES] ET AL) 14 November 2019 (2019-11-14) * the whole document * ----- | 1-11 | |

**TECHNICAL FIELDS SEARCHED (IPC)**

G05B
B23K
D06C

The present search report has been drawn up for all claims

| Place of search | Date of completion of the search | Examiner |
|---|---|---|
| The Hague | 4 October 2021 | Sollazzo, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 38 2330

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2021

| Patent document cited in search report | | Publication date | Patent family member(s) | | Publication date |
|---|---|---|---|---|---|
| CN 100341708 | C | 10-10-2007 | NONE | | |
| WO 2020025771 | A1 | 06-02-2020 | BR 112021001780 A2 | | 27-04-2021 |
| | | | CN 112789134 A | | 11-05-2021 |
| | | | EP 3829808 A1 | | 09-06-2021 |
| | | | US 2021301460 A1 | | 30-09-2021 |
| | | | WO 2020025771 A1 | | 06-02-2020 |
| EP 1832375 | A1 | 12-09-2007 | NONE | | |
| US 2019345658 | A1 | 14-11-2019 | CN 110382764 A | | 25-10-2019 |
| | | | EP 3346038 A1 | | 11-07-2018 |
| | | | ES 2729771 T3 | | 06-11-2019 |
| | | | US 2019345658 A1 | | 14-11-2019 |
| | | | WO 2018127838 A1 | | 12-07-2018 |

EPO FORM P0459

For more details about this annex : see Official Journal of the European Patent Office, No. 12/82

**EP 4 080 299 A1**